# EUROPEAN PATENT APPLICATION

(11) **EP 0 680 180 A1**
(43) Date of publication of application: **02.11.1995**
(21) Application number: 95102948.7
(22) Date of filing: 02.03.1995
(51) Int. Cl.: H04L 12/56

(54) **Improvements in or relating to asynchronous transfer mode (ATM) system**

(30) Priority: 23.03.1994 GB 9405700
(71) Applicant: ROKE MANOR RESEARCH LIMITED, Romsey, Hampshire, SO51 0ZN (GB); Siemens Aktiengesellschaft, D-80506 München (DE)
(72) Inventor: Hayter, Andrew Timothy, Bitterne Park, Southampton S02 4LN (GB); Fischer, Wolfgang, D-82110 Germering (DE); Davis, Simon Paul, Romsey, Hamphsire S051 7LX (GB); Worster, Thomas, D-80796 Munich (DE)
(74) Representative: Allen, Derek

(57) **Abstract**

An asynchronous transfer mode system comprising buffers which are placed at the input and output of a core ATM switch and flow control means for managing cell flow between these buffers.

## Description

This invention relates to ATM systems and more especially it relates to the provision of an ATM switching system which can efficiently support bursty, non-real time traffic.

Considering firstly technical background relating to the invention, ATM networks and switches support a mixture of traffic including bursty traffic. By its nature, bursty traffic requires high bit rates for part of the time and low/zero bit rates for the rest of the time. In order to efficiently use the bit rate available in a network, it is necessary to allocate to a connection, a lower bit rate than its peak bit rate such that the total peak bit rate of all the connections is greater than the bit rate of the individual network links.

ATM cells destined for a particular output port of an ATM switch will enter the switch from many different input ports. The total instantaneous rate of these cell flows may be greater than the output port can sustain, thus a temporary overload of the output port may occur. Reducing the output port's average load may reduce the probability of this overload to an operationally acceptable level but this results in a low utilisation of the network which is not usually acceptable. In an alternative approach large buffers can be included in the ATM switch which buffer the overload of cells causing them to be delayed so that they can be transmitted at the link rate.

According to the present invention. an asynchronous transfer mode system comprises buffers which are placed at the input and output of a core ATM switch and flow control means for managing cell flow between these buffers.

The buffers may be managed to ensure that traffic is transmitted across the said switch from subscribers line cards on one side of the switch to subscribers line cards on the other side of the switch in accordance with a predetermined quality of service traffic specification.

One flow control system is described in our co-pending patent application no GB 9322744.5, which ensure that peak bit rate allocation across the ATM switch is achieved, and further description herein is therefore believed to be unnecessary.

Attention is hereby directed to the foregoing co-pending patent application and also our co-pending patent application GB 9212447.8 which provide useful background information and which will therefore facilitate a better understanding of the present invention.

One embodiment of the present invention will now be described with reference to the accompanying drawings in which;
FIGURE 1 is a block schematic diagram of an overall system and,
FIGURE 2 is a block schematic diagram showing flow control.

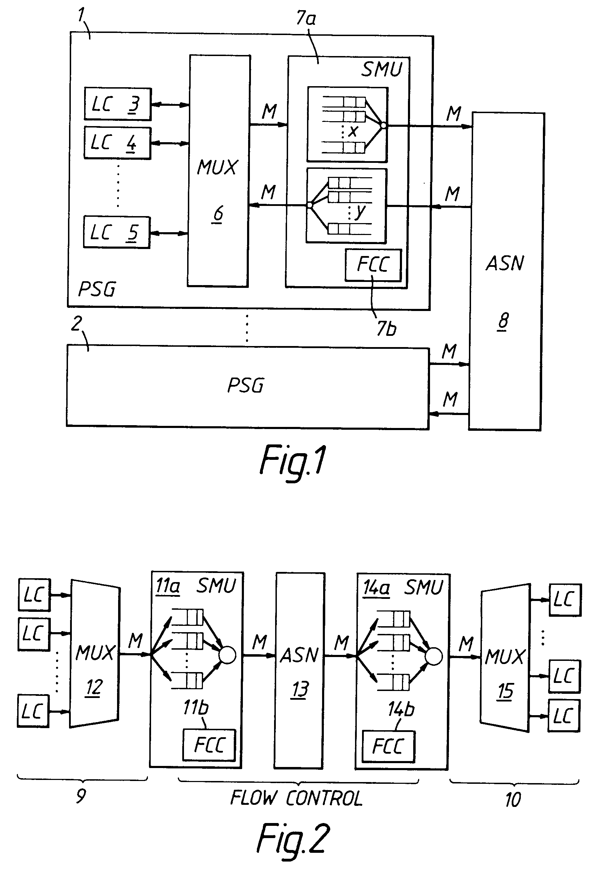

The system illustrated in Figure 1 is characterised by a plurality of peripheral switch groups (PSG) only two of which 1 and 2 are shown. A PSG comprises a number of line cards 3, 4, 5, an ATM concentration multiplexer (MUX) 6, and a statistical multiplexing unit (SMU) 7a, operatively associated with a flow controller 7b. Customer equipment, subscriber lines, feeder lines and trunks (not shown), connect to the switch via the line cards 3, 4, 5. The MUX 6, acts as a traffic concentrator between the line cards 3, 4, 5 and the SMU 7a, which in turn connects to the switch core or ATM switching network (ASN) 8. This allows lines with a low average load, for example subscriber lines, to be connected without wasting the throughput capacity of the SMU 7a, or ASN 8. The above mentioned input and output buffers and the flow control 7b apparatus are located within the SMU 7a.

Physical implementation of the PSG 1, 2 may mean that some functional blocks share the same physical realisation without losing their separate functionality.

In Figure 2, a switch system is shown in exploded form showing data flow from left to right. To the extreme left and right respectively are the ingress 9 and egress 10, sides of the line cards and the MUX, and these take no part in flow control procedures. Resources for bursty non-real time traffic over zones comprising the ingress 9 and egress 10 sides, are managed according to peak bit rate reservation protocols. The input side of a SMU 11a and a MUX 12 is shown to the left of an ASN 13, whereas the output side of a SMU 14a and a MUX 15 is shown to the right of the ASN 13.

Within each SMU 11a,14a, there is one input queue for each PSG attached to the ASN 13. Cells may be sent independently between any of the PSGs according to two limiting factors:
The output link bit rate from the ASN 13 to the PSG;
The input link bit rate from the PSG to the ASN 13.

Flow control procedures operate under control of units 11b and 14b to manage these limited bit rates fairly for all connections, both internally to the switch and between PSGs, and to limit bit rate to peak reservation across the ASN 13. The procedures do not allow the total transmission rates from the input queues across the ASN 13 input and output links to exceed these links capacities. Thus ASN 13 overload and cell loss is avoided at the expense of having to queue potentially large amounts of data in the input queues.

Once cells have been switched across the ASN 13 they enter the egress side 10 of the SMU 14a. Here the cells are sorted and stored in queues depending on the output link they are destined for. If the bit rate between the ASN 13 and the PMG is greater than the link rate of a line card, the ASN 13 may instantaneously deliver more cells to an output port than can be handled, and for this reason they are queued for controlled transmission at the rate of the output port.

The ATM switching system therefore comprises line cards from which the cells pass through a MUX which concentrates the cell flows onto a multiplexed link. The cells are then sent to the statistical multiplexing unit (SMU) where, in a plurality of queues, one queue for each PSG connected to the ASN, non-real time cells may be buffered. A flow control procedure operates between the PSGs which avoids internal collisions and loss by maintaining peak rate reservation on the ASNs input and output links. Non-real time cells are also queued in output queues in order that they can be sent from the switching system at a predetermined and controlled rate.

The flow control procedures must operate to: fairly distribute the input bandwidth from the PSG to the ASN between all the input queues in each SMU; fairly distribute the output bandwidth from the ASN to a PSG between all the PSGs connected to the ASN; allow for differences in the quality of service required by different customers; handle multicast traffic, and handle 'available bit rate traffic', which traffic is defined to be a class of traffic having a known loss characteristic but no specific delay characteristic.

A preferred flow control procedure is based on the DBA protocol and procedures which are described in our co-pending patent application no GB 9322744.5.

## Claims

1. An asynchronous transfer mode system comprising buffers which are placed at the input and output of a core ATM switch and flow control means for managing cell flow between these buffers.

2. A system as claimed in Claim 1, wherein the buffers are arranged such that cells destined for different peripheral switch groups are stored in separate logical queues at an input side of a statistical multiplexing unit coupled to the core ATM switch.

3. A system as claimed in Claim 1 or Claim 2, wherein the buffers are managed to ensure that traffic is transmitted across the said switch from subscribers line cards on one side of the switch to subscribers line cards on the other side of the switch in accordance with a predetermined quality of service traffic specification.

4. A system as claimed in Claim 3, wherein queues on an input side of the ATM switching network are fed via an input multiplexer from a plurality of line cards and wherein queues on an output side of the core ATM switch are arranged to feed a plurality of line cards via an output multiplexer.

5. A system as claimed in Claim 4, wherein the queues are operatively associated, on both the input and output sides of the ATM switching network with the said flow control means.

6. A system as claimed in any preceding claim, wherein the flow control means is operated so as to achieve peak bit rate allocation across the said switch.
